# EUROPÄISCHE PATENTSCHRIFT

(11) **EP 4 100 171 B1**
(45) Veröffentlichungstag und Bekanntmachung des Hinweises auf die Patenterteilung: **30.08.2023**
(21) Anmeldenummer: 22701182.2
(22) Anmeldetag: 12.01.2022
(51) Int. Cl.: B05B 7/04, B05B 13/06, B05B 7/06, F16L 58/10, F16L 9/18

(54) **ANLAGE ZUM AUFSPRITZEN EINES BESCHICHTUNGSMITTELS AUF ROHR-INNENWÄNDE UND SPRITZGERÄT FÜR DIESE ANLAGE**
SYSTEM FOR SPRAYING A COATING AGENT ONTO PIPE INNER WALLS, AND SPRAYING APPARATUS FOR THIS SYSTEM
INSTALLATION DE PROJECTION D'UN AGENT DE REVÊTEMENT SUR DES PAROIS INTÉRIEURES DE TUBES ET APPAREIL DE PROJECTION POUR CETTE INSTALLATION

(30) Priorität: 12.01.2021 DE 102021000092
(43) Veröffentlichungstag der Anmeldung: 14.12.2022
(73) Patentinhaber: Säkaphen GmbH, 45964 Gladbeck (DE); Donelli Alexo S.r.l., 20012 Cuggiono (MI) (IT)
(72) Erfinder: FISCHER-ZERNIN, Christoph, 45964 Gladbeck (DE); DONELLI, Martino, 20012 Cuggiono (MI) (IT)
(74) Vertreter: Paustian, Othmar
(86) Internationale Anmeldenummer: PCT/EP2022/050569
(87) Internationale Veröffentlichungsnummer: WO 2022/152765

(56) Entgegenhaltungen:
- EP-B1- 0 028 088
- WO-A1-2008/037755
- DE-A1-102011 015 493
- US-A- 3 202 363
- US-A- 4 368 219

## Beschreibung

Die Erfindung betrifft eine Anlage zum Aufspritzen eines Beschichtungsmittels auf die Innenwände von Rohren unter Mitwirkung von Luft nach dem Oberbegriff des Anspruches 1 und ein Spritzgerät dafür.

Solche Anlagen werden insbesondere zum Beschichten der Rohre von chemotechnischen Aggregaten, z.B. Wärmetauscher, eingesetzt. Ein Wärmetauscher umfasst zahlreiche parallele Rohre, die vertikal und horizontal voneinander beabstandet und in einem gemeinsamen Kessel angeordnet sind. Die Innenwände der Rohre werden beschichtet, um insbesondere Korrosion und Inkrustation zu verhindern. Jedes Rohr eines Wärmetauschers wird separat beschichtet. Das Spritzgerät der Anlage wird an einem Ende in das jeweilige Rohr eingeführt und bis zu dessen anderem Ende mithilfe der Schlauchverbindung vorgeschoben. Sodann wird das Spritzgerät zurückgezogen, wobei im Rückzug das über die Schlauchverbindung zugeführte Beschichtungsmittel unter Mitwirkung von ebenfalls über die Schlauchverbindung zugeführter Luft ausgespritzt wird.

Das Ausspritzen des Beschichtungsmittels muss beim Erreichen des Endes des jeweiligen Rohres sehr kurzfristig abschaltbar sein, damit das Beschichtungsmittel nicht in die Umgebung austritt. Die Innendurchmesser der Rohre z.B. von Wärmetauschern sind in den letzten Jahren immer kleiner geworden, und zwar so klein, dass die Spritzgeräte derzeit üblicher Anlagen nicht mehr in die Rohre hineinpassen.

Eine Anlage zum Beschichten der Innenwände von langen Rohren mit geringem Durchmesser wird in US 4 368 219 A offenbart.

Der Erfindung liegt die Aufgabe zugrunde, diesen Nachteilen bekannter Anlagen abzuhelfen.

Die Aufgabe wird durch eine Anlage mit den kennzeichnenden Merkmalen des Anspruchs 1 gelöst.

Auch bei bekannten Anlagen müssen Beschichtungsmittel und Luft dem Spritzgerät getrennt zugeführt werden und dürfen erst beim Austritt aus der Spritzdüse zusammenkommen, damit sich ein gleichmäßiges Spritzbild ergibt. Üblicherweise sind die beiden Schläuche im Bereich des Anschlusses an das Spritzgerät nebeneinander angeordnet. Das erfordert einen relativ großen Durchmesser des Spritzgerätes. Gemäß der Erfindung umfasst die Schlauchverbindung zwei ineinander angeordnete Schläuche, wobei der Außenschlauch die Luft führt und der Innenschlauch das flüssige Beschichtungsmittel. Dadurch kann der Durchmesser des Spritzgerätes deutlich reduziert werden, bis hinab zum Außendurchmesser des Außenschlauches. Ein Außendurchmesser des Spritzgerätes und des Außenschlauches von 10 mm ist realisierbar. Das ermöglicht die Innen-Beschichtung von Rohren mit einer Untergrenze des Innendurchmessers von 11 mm.

Bei einer etwas größeren Bauform hat der Außenschlauch einen Außendurchmesser von 12 mm und einen Innendurchmesser von 10 mm und der Innenschlauch einen Außendurchmesser von 8 mm und einen Innendurchmesser von 6 mm.

Eine konzentrische Führung des Innenschlauches innerhalb des Außenschlauches ist nicht notwendig. Bei einer Länge der Schlauchverbindung von z.B. 12 m, die wiederum durch die Länge der zu beschichtenden Rohre bestimmt ist, kann es durchaus sein, dass die Schlauchverbindung in Schleifen verläuft und sich der Innenschlauch in einzelnen Abschnitten an die Innenwand des Außenschlauches anlegt, sodass der Innenschlauch nicht mehr von einem konzentrischen Ringraum umgeben ist, sondern mit dem Außenschlauch einen im Querschnitt sichelförmigen Kanal bildet. Das ist jedoch nach den Erkenntnissen aufgrund der Erfindung für das Spritzergebnis unerheblich, denn der wirksame Querschnitt des Raumes zwischen Außenschlauch und dem Innenschlauch ändert sich durch solche Verlagerungen nicht.

Die Schlauchverbindung der erfindungsgemäßen Anlage kann durch handelsübliche, flexible Schläuche vorzugsweise aus Polyamid (Vilsan) gebildet werden, die einfach ineinandergeschoben werden.

Vorzugsweise ist das Spritzgerät an die erfindungsgemäße Ausbildung der Schlauchverbindung dadurch angepasst, dass seine beiden Anschlüsse für Beschichtungsmittel und Luft ebenfalls konzentrisch zueinander ausgebildet sind. Dann benötigt das Spritzgerät in Querrichtung des bearbeiteten Rohres nicht mehr Platz als der Außenschlauch der Schlauchverbindung.

Die mit der erfindungsgemäßen Anlage erzielte Beschichtung soll im Betrieb das Material des beschichteten Rohres vor dem Medium im Rohr und das Medium im Rohr vor Einflüssen durch das Material des Rohres schützen. Das bedingt, dass die in diesem Sinne trennende Beschichtung gleichförmig und frei von Fehlstellen ist. Voraussetzung hierfür ist neben einer gleichförmigen Bewegung des Spritzgerätes im jeweiligen Rohr die genaue Zentrierung und konstante Ausrichtung des Spritzgerätes gegenüber der Längsachse des Rohres. Im denkbar einfachsten Fall berührt das Spritzgerät die Innenwand des Rohres, wird also unmittelbar im Rohr geführt. Bei dieser Vorgehensweise wäre aber für jeden Rohrdurchmesser ein eigenes Spritzgerät erforderlich. Gemäß der Erfindung wird nur ein Spritzgerät vorgehalten, dessen Abmessung in Querrichtung auf den Durchmesser der engsten zu beschichtenden Rohre abgestimmt ist. Zur Verwendung in Rohren größeren Durchmessers weist der Gerätekörper des Spritzgerätes an seiner Außenseite Führungsmittel auf, die im Zusammenwirken mit der Innenwand des jeweiligen Rohres das Spritzgerät innerhalb des Rohres zentrieren. Eine bevorzugte Ausbildung solcher Führungsmittel geht aus Anspruch 4 hervor. Das Spritzgerät wird im jeweiligen Rohr durch Führungsringe zentriert, die auf den Gerätekörper des Spritzgerätes aufsteckbar sind und einem dem Innendurchmesser des jeweiligen Rohres entsprechenden Außendurchmesser haben. Da in der Regel viele gleiche Rohre eines Rohrbündels beschichtet werden, bedeutet das Auswechseln der Führungsringe bei einem Übergang zu einem anderen Rohr-Durchmesser keine besondere Belastung.

Auf Seiten der Lieferstation werden Luft und Beschichtungsmittel über ein Y-Anschluss-Stück in die eigentliche Schlauchverbindung eingeleitet. Das Anschluss-Stück hat am Eingang zwei separate, nebeneinanderliegende Anschlüsse für Beschichtungsmittel und Luft und am Ausgang zwei konzentrische Anschlüsse für die Schlauchverbindung. Das Y-Stück stellt also einen Adapter dar, über den sich Luft und Beschichtungsmittel aus zwei üblichen, nicht ineinandersteckenden Schläuchen in die erfindungsgemäß ausgebildete Schlauchverbindung einleiten lassen. Das Y-Anschluss-Stück kann am beweglichen Teil einer Wickeleinrichtung für die Schlauchverbindung angebracht sein, mittels welcher das Spritzgerät über die Schlauchverbindung mechanisch im jeweils zu beschichtenden Rohr bewegt oder positioniert wird. Beschichtungsmittel und Luft gelangen über Drehverbindungen zur Wickeleinrichtung.

Das flüssige Beschichtungsmittel und die Luft stehen während des Aufspritzens des Beschichtungsmittels auf die Innenwand des zu beschichtenden Rohres unter Druck, der auf Seiten der Lieferstation erzeugt wird. Am Schluss des Aufspritzvorganges, also wenn das Spritzgerät das Rohr-Ende erreicht hat, gilt es, den Austritt des Beschichtungsmittels aus der Spritzdüse sehr schnell, praktisch schlagartig abzuschalten, um einen Austritt des Beschichtungsmittels außerhalb des Rohres in die Umgebung zu verhindern. Dies geschieht erfindungsgemäß mithilfe eines Dreiweg-Ventils, das in der Nähe der Lieferstation angeordnet ist. Es verbindet den Innenschlauch der Schlauchverbindung für das Beschichtungsmittel umschaltbar entweder mit der Pumpe oder mit einer Rückführ-Leitung für das Beschichtungsmittel, die zur Umgebung offen ist. Wird das Dreiweg-Ventil zwischen Pumpe und Innenschlauch geschlossen und so gleichzeitig zwischen Innenschlauch und Rückführ-Leitung geöffnet, baut sich über diese der Beschichtungsmittel-Druck im Innenschlauch sofort ab. Der Austritt des Beschichtungsmittels an der Spritzdüse endet deshalb beim Abschalten praktisch ohne Nachtröpfeln. Der Fluss des Beschichtungsmittels wird in sehr kurzer Zeit gestoppt. Das bei bekannten Anlagen zu beobachtende Weitersprühen der Spritzdüse nach dem Austritt aus dem beschichteten Rohr unterbleibt vollständig. Das ist bei der Erfindung möglich, obwohl das Spritzgerät keine bewegliche Nadel aufweist zum Dosieren und Sperren des Austritts des Beschichtungsmittels, was wiederum die Zuverlässigkeit erhöht, den Wartungsaufwand verringert, kleinere Abmessungen ermöglicht und die Gleichmäßigkeit des Spritzbildes verbessert.

Derzeit übliche nadellose Spritzgeräte mit Luftunterstützung steuern den Fluss des Beschichtungsmittels mithilfe eines Zweiwegeventils, das unmittelbar am Spritzgerät angebracht ist, also mit einem geringen Abstand zur Spritzdüse; eine solche Anordnung erzeugt jedoch nicht hinnehmbare Verzögerungen beim Abschalten des Beschichtungsmittel-Flusses.

Ein für die erfindungsgemäße Anlage besonders geeignetes Spritzgerät geht aus den Ansprüchen 7 und 8 hervor. Bei diesem wird die konzentrische Einleitung von Beschichtungsmittel und Luft in das Spritzgerät mit Vorteil für eine kompakte Bauform des Spritzgerätes und für die Erzielung eines Spritzbildes genutzt, das für die Beschichtung der Innenwände von Rohren - im Gegensatz zum Aufspritzen von Beschichtungsmittel auf ebene Flächen - besonders geeignet ist.

Weitere vorteilhafte Einzelheiten einer in diesem Sinne besonders geeigneten Spritzdüse des Spritzgerätes sind in Anspruch 9 gekennzeichnet.

Die erfindungsgemäße Anlage arbeitet mit variablem Druck des Beschichtungsmittels und der Luft von maximal 8 bar und ist für die präzise und gleichmäßige Aufbringung einer Innen-Beschichtung in stark beengten Räumen ausgelegt, insbesondere für Rohre mit einem Innen-Durchmesser bis hinab zu 11 mm. Die erfindungsgemäße Ausbildung der Schlauchverbindung für Beschichtungsmittel und Luft zwischen der Lieferstation und dem Spritzgerät ermöglicht die effektive Nutzung des kleinen Querschnitts, der zur Verfügung steht. Der radiale, mittlere Abstand zwischen dem Innenschlauch und dem Außenschlauch beträgt vorzugsweise ca. 1 mm. Dies reicht für die Weiterleitung der Luft aus. Der Innendurchmesser des Innenschlauches muss mindestens 4 mm betragen, damit bei vergleichsweise niedrigem Druck des Beschichtungsmittels genügend Beschichtungsmittel transportiert wird.

Das an die Schlauchverbindung angeschlossene Spritzgerät weist einen zentralen, sich in Längsrichtung erstreckenden Kanal für das Beschichtungsmittel auf. Mit einem Abschnitt verläuft der Kanal innerhalb eines Anschluss-Stückes für den Innenschlauch der Schlauchverbindung, auf das der Innenschlauch aufgeschoben wird. Am anderen, freien Ende verjüngt sich der Kanal zu einer Düse und entlässt das Beschichtungsmittel direkt in die Umgebung.

Parallel zum zentralen Kanal und verteilt über dessen Umfang verlaufen mehrere kleinere Kanäle, welche jeweils mit einem Abschnitt innerhalb eines Anschluss-Stückes für den Außenschlauch der Schlauchverbindung verlaufen. Dieses ist an der Außenseite des Spritzgerätes ausgebildet, und zwar konzentrisch mit dem Anschluss-Stück für den Innenschlauch und gegenüber diesem in Längsrichtung des Spritzgerätes zum freien Ende hin versetzt.

Die kleineren Kanäle leiten die Luft aus dem Außenschlauch in einen zum zentralen Kanal konzentrischen Ringraum weiter, der die Düse umgibt und in einen in Längsrichtung offenen Mischraum übergeht, in den die Düse mündet. Von dort entweicht die Luft in die Umgebung und versprüht dabei das aus dem zentralen Kanal austretende Beschichtungsmittel in einem radialsymmetrischen Spritzbild. Dabei gelangen Luft und Beschichtungsmittel nur außerhalb des eigentlichen Spritzgerätes in gegenseitigen Kontakt.

Weitere vorteilhafte Einzelheiten der Erfindung gehen aus den beiliegenden Figuren einer bevorzugten Ausführungsform hervor. Darin zeigen
Figur 1 ein Schemabild einer erfindungsgemäßen Anlage,
Figur 2 im Längsschnitt den Gerätekörper eines Spritzgerätes der Anlage nach Figur 1,
Figur 2a eine Ansicht der in Figur 2 linken Stirnseite des Gerätekörpers nach Figur 2,
Figur 3 im Längsschnitt eine Endkappe für den Gerätekörper nach Figur 2,
Figur 4 eine Seitenansicht des Spritzgerätes mit dem Gerätekörper nach Figur 2 und der aufgeschraubten Endkappe nach Figur 3,
Figur 5 eine Seitenansicht des Spritzgerätes nach Figur 4 mit aufgezogenen Führungsringen innerhalb eines Rohres,
Figur 6 im Längsschnitt ein Y-Anschluss-Stück für die Schlauchverbindung der Anlage nach Figur 1.

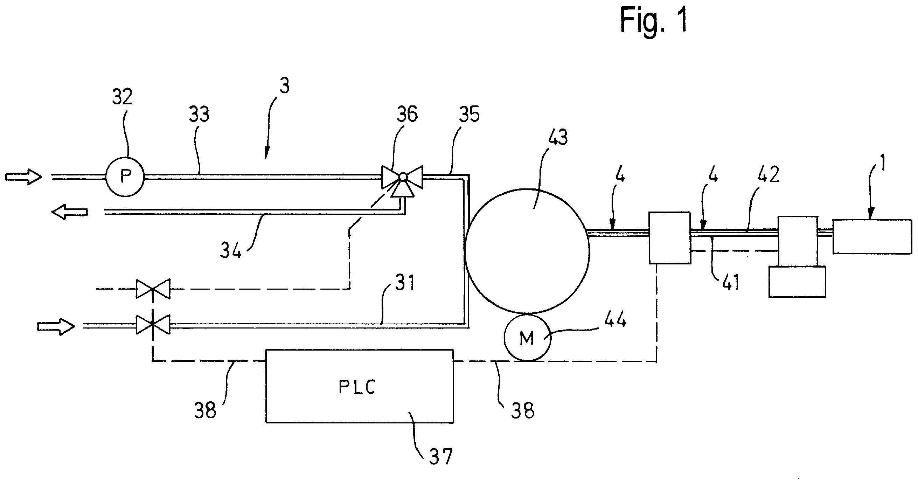

Die in Figur 1 schematisch gezeigte Anlage zum Aufspritzen eines flüssigen Beschichtungsmittels auf die Innenwände von Rohren umfasst ein Spritzgerät 1, eine Lieferstation 3 für das Beschichtungsmittel und für Druckluft sowie eine Schlauchverbindung 4 zwischen dem Spritzgerät 1 und der Lieferstation 3. Das Spritzgerät 1 ist durch Vorschieben mittels der Schlauchverbindung 4 jeweils in eines von mehreren zu beschichtenden Rohren, die hier nicht gezeigt sind, bis zum distalen Ende hineinschiebbar und wieder herausziehbar. Während des Herausziehens sprüht das Spritzgerät 1 flüssiges Beschichtungsmittel auf die Innenwand des Rohres. Die Steuerung der Bewegung und Positionierung des Spritzgerätes in den Rohren erfolgt mit Hilfe eines Steuergerätes 37 und ist im Einzelnen nicht Gegenstand der Erfindung.

Das Beschichtungsmittel wird aus einem nicht gezeigten Vorrat mittels einer Pumpe 32 gefördert und gelangt über eine Zuleitung 33, ein Dreiwegventil 36 und eine weitere Zuleitung 35 zu einer Wickeleinrichtung 43. Aus einer nicht gezeigten Druckluftquelle wird Druckluft über eine Zuleitung 31 ebenfalls zur Wickeleinrichtung 43 geleitet.

Die Schlauchverbindung umfasst einen flexiblen Außenschlauch 41 aus Polyamid, in den ein flexibler Innenschlauch 42 ebenfalls aus Polyamid eingeschoben ist. Der Außenschlauch hat z.B. einen Außendurchmesser von 12 mm und einen Innendurchmesser von 10 mm. Der Innenschlauch hat einen Außendurchmesser von 8 mm, der also kleiner als der Innendurchmesser des Außenschlauches ist, und einen Innendurchmesser von 6 mm. Der Innenschlauch liegt lose im Außenschlauch, ohne zwischen Innenschlauch und Außenschlauch eingefügte Abstandshalter. Die Wandstärke und die Materialeigenschaft der Schläuche sind aber so bemessen, dass die Schläuche nicht einfach abknicken können. Ihre Steifigkeit ist so groß, dass das Spritzgerät 1 mit Hilfe der Schlauchverbindung 4 in das zu beschichtende Rohr hineingeschoben werden kann, und zwar auch über eine beträchtliche Länge. Die Rohre können durchaus z.B. 12 m lang sein.

Die Vor- und Rückwärtsbewegung der Schlauchverbindung 4 mit dem Spritzgerät 1 am freien Ende wird durch die Wickeleinrichtung 43 erzeugt, die von einem Motor 44 in Auf- oder Abwickelrichtung angetrieben wird, gesteuert durch die Steuereinrichtung 37 über eine Steuerleitung 38.

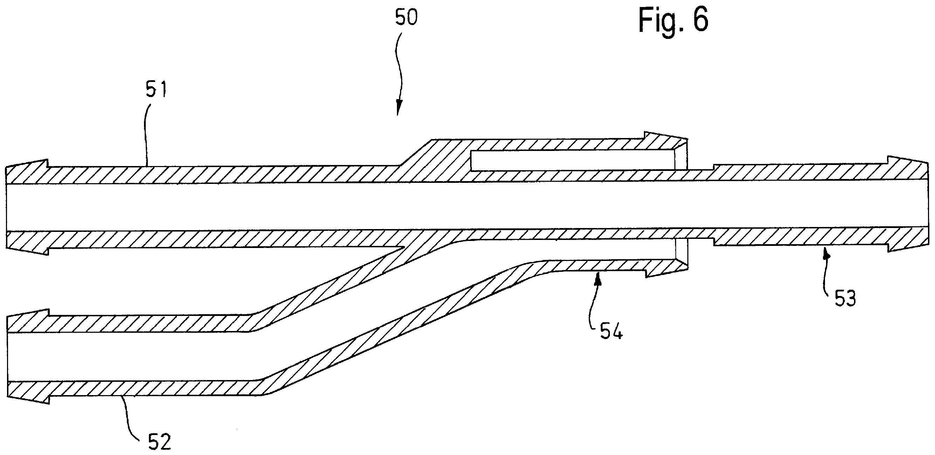

Nicht dargestellt ist in Figur 1, dass die Wickeleinrichtung 43 das in Figur 6 gezeigte Y-Anschluss-Stück 50 umfasst, welches den Übergang von den beiden separaten Zuleitungen 31 und 35 für Luft bzw. Beschichtungsmittel zu den beiden Schläuchen 41 bzw. 42 der Schlauchverbindung 4 bewirkt.

Das Y-Anschluss-Stück 50 umfasst ein gerade durchgehendes Rohrstück, das eingangsseitig als Anschluss 51 für einen Schlauch, der Beschichtungsmittel zuführt, und ausgangsseitig als Anschluss 53 für den Innenschlauch 42 der Schlauchverbindung 4 ausgebildet ist. Das durchgehende Rohrstück ist über einen Teil seiner Länge von einem Ringraum umgeben, dessen Außenwand als Anschluss 54 für den Außenschlauch 41 der Schlauchverbindung ausgebildet ist und der einen seitlichen Anschluss 52 für einen die Druckluft führenden Schlauch aufweist. Das gepumpte Beschichtungsmittel aus der Zuleitung 35 und die Druckluft aus der Zuleitung 31 gelangen über Drehverbindungen an der Wickeleinrichtung und zwei weiterführenden Schläuchen zu den Anschlüssen 51 bzw. 52 und von dort in den Innenschlauch 42 bzw. den Außenschlauch 41.

Das Dreiwegventil 36 hat zwei Schaltstellungen und wird ebenfalls von der Steuereinrichtung 37 über eine Steuerleitung 38 eingestellt. In einer Schaltstellung ist die Zuleitung 33 von der Pumpe 32 mit der Zuleitung 35 und weiter mit dem Innenschlauch 42 verbunden. Das Beschichtungsmittel wird zum Spritzgerät 1 gepumpt. In der anderen Schaltstellung ist die Zuleitung 33 gesperrt, und die Zuleitung 35 und damit der Innenschlauch 42 sind mit der Rückführ-Leitung 34 verbunden, die ins Freie führt. Ist ein Beschichtungsvorgang beendet, wird in die andere Schaltstellung umgestellt und dadurch das Beschichtungsmittel in der Schlauchverbindung 4 sofort vom Druck entlastet, sodass es am Spritzgerät sofort nicht mehr austritt.

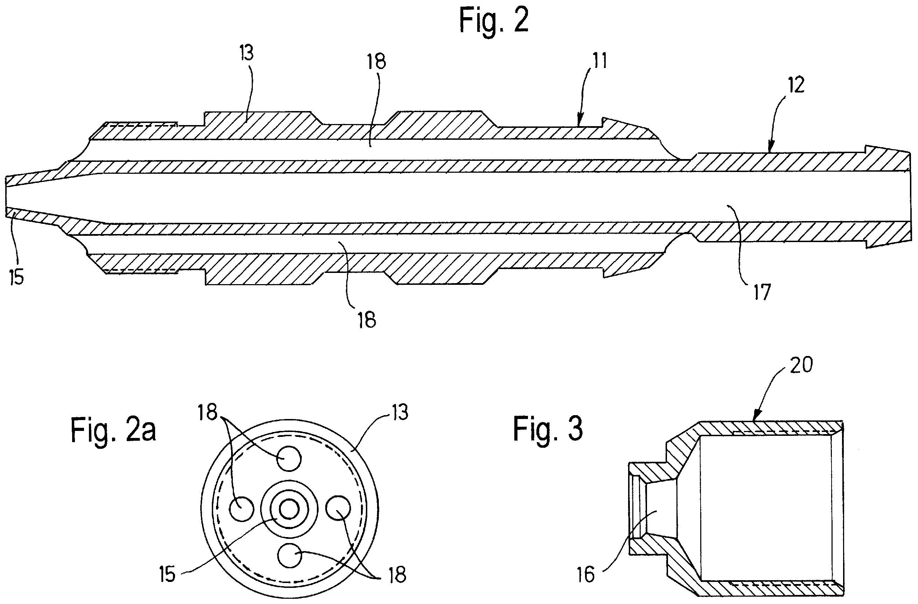

Das Spritzgerät 1 ist an das andere, freie Ende der Schlauchverbindung 4 unmittelbar angeschlossen. Es ist im Einzelnen in den Figuren 2 bis 5 dargestellt. Es umfasst einen langgestreckten, zylindrischen Gerätekörper 13, in dessen Innerem ein in Längsrichtung durchgehender zentraler Kanal 17 für das Beschichtungsmittel ausgebildet ist. Eingangsseitig verläuft der Kanal innerhalb eines Anschluss-Stückes 12 für den Innenschlauch 42. Am anderen freien Ende verjüngt sich der Kanal 17 zu einer Spritzdüse 15 und entlässt das zugeführte Beschichtungsmittel in die Umgebung.

Parallel zum zentralen Kanal 17 und verteilt über dessen Umfang verlaufen im Gerätekörper 13 mehrere kleinere Kanäle 18, vgl. Figur 2a. Sie erstrecken sich jeweils mit einem Abschnitt innerhalb eines Anschluss-Stückes 11, das an der Außenseite des Gerätekörpers ausgebildet und für den aufzuschiebenden Außenschlauch 41 der Schlauchverbindung 4 bestimmt ist. Die beiden Anschluss-Stücke 11 und 12 sind demnach konzentrisch zueinander angeordnet und in Längsrichtung des Gerätekörpers gegeneinander versetzt, wodurch das Anschluss-Stück 12 für den Innenschlauch 42 freiliegt.

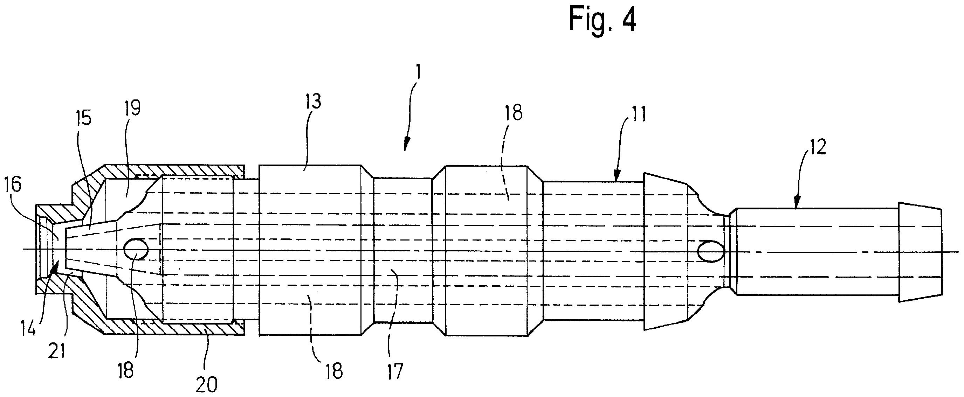

Am distalen Ende ist eine Düsenanordnung 14 vorgesehen. Sie umfasst die Spritzdüse 15 und eine in Strömungsrichtung nachfolgende Mischkammer 16. Letztere wird durch eine auf den Gerätekörper 13 aufgeschraubte Endkappe 20 gebildet, vgl. Figur 3 und 4. Die Endkappe bildet außerdem einen die Spritzdüse 15 umgebenden Ringraum 19, in den in axialer Richtung die kleinen Kanäle 18 münden. Die Spritzdüse 15 ist außenseitig und die Endkappe 20 ist innenseitig so geformt, dass zwischen beiden ein ringförmiger Schlitz 21 besteht, durch den die dem Ringraum 19 über die kleinen Kanäle 18 zugeführte Luft in den Mischraum 16 eintritt und sich dort mit dem aus der Spritzdüse 15 austretenden Beschichtungsmittel vermischt. Der ringförmige Schlitz 21 hat konische Gestalt mit abnehmendem Durchmesser in Strömungsrichtung. Der anschließende Mischraum 16 verengt sich zunächst in Fortsetzung des Schlitzes 21 und öffnet sich sodann mit zunehmendem Durchmesser zum distalen Ende. Dort entlässt er das Gemisch aus Luft und Beschichtungsmittel in einer Richtung mit ausgeprägt radialer Komponente und mit einer über den Umfang des Mischraums 16 gleichförmigen Verteilung des Beschichtungsmittels.

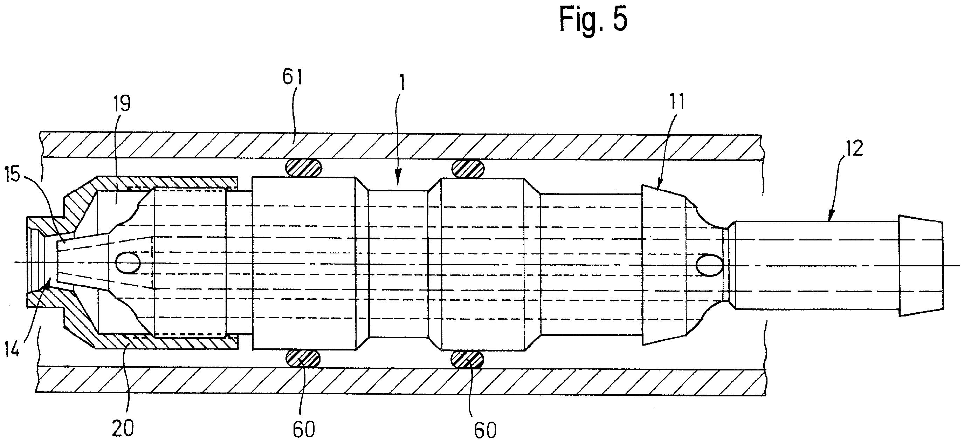

Gemäß Fig 5 wird das Spritzgerät 1 während seiner Bewegung durch das zu beschichtende Rohr 61 mit Hilfe zweier Führungsringe 60 im Rohr 61 zentriert und hinsichtlich der Lage seiner Längsachse stabilisiert, was dem gleichmäßigen Auftrag des Beschichtungsmittels zugutekommt. Die Führungsringe 60 sind jeweils auf den Gerätekörper 13 mit Presssitz aufgesteckt und umschließen diesen über den gesamten Umfang. In Längsrichtung des Gerätekörpers sind sie voneinander beabstandet. Der Außendurchmesser der Führungsringe 60 entspricht dem Innendurchmesser des jeweils zu beschichtenden Rohres 61. Zur Anpassung an unterschiedliche Innendurchmesser werden die Führungsringe ausgewechselt und durch jeweils passende Führungsringe ersetzt.

### Liste der Bezugszeichen

- 1: Spritzgerät
- 3: Lieferstation
- 4: Schlauchverbindung
- 11: Anschluss-Stück Luft
- 12: Anschluss-Stück Beschichtungsmittel
- 13: Gerätekörper
- 14: Düsenanordnung
- 15: Spritzdüse
- 16: Mischraum
- 17: Zentraler Kanal
- 18: Kleine Kanäle
- 19: Ringraum
- 20: Endkappe
- 21: Ringförmiger Schlitz
- 31: Zuleitung Luft
- 32: Pumpe Beschichtungsmittel
- 33: Zuleitung Beschichtungsmittel
- 34: Rückführ-Leitung Beschichtungsmittel
- 35: Zuleitung Beschichtungsmittel
- 36: Dreiwegventil
- 37: Steuergerät
- 38: Steuerleitung
- 41: Außenschlauch
- 42: Innenschlauch
- 43: Wickeleinrichtung
- 44: Motor
- 50: Y-Anschluss-Stück
- 51: Anschluss-Beschichtungsmittel am Eingang
- 52: Anschluss-Luft am Eingang
- 53: Anschluss-Beschichtungsmittel am Ausgang
- 53: Anschluss-Luft am Ausgang
- 60: Führungsring
- 61: Rohr

## Patentansprüche

1. Anlage zum Aufspritzen eines flüssigen Beschichtungsmittels auf die Innenwände von Rohren unter Mitwirkung von Luft,
mit einem nadellosen Spritzgerät (1) für das Beschichtungsmittel, das getrennte Anschlüsse (12; 11) für Beschichtungsmittel und Luft aufweist und das in das jeweilige Rohr einführbar und in dessen Längsrichtung verschiebbar ist,
mit einer ortsfesten Lieferstation (3) zur Bereitstellung des unter Druck stehenden Beschichtungsmittels und von unter Druck stehender Luft,
und mit einer Schlauchverbindung (4) für Beschichtungsmittel und Luft zwischen der Lieferstation (3) und dem im Rohr verschiebbaren Spritzgerät (1),
wobei die Schlauchverbindung (4) einen Außenschlauch (41) für die Luft und einen Innenschlauch (42) für das Beschichtungsmittel umfasst, der sich im Inneren des Außenschlauches (41) befindet und dessen Außendurchmesser kleiner als der Innendurchmesser des Außenschlauches (41) ist,
**dadurch gekennzeichnet,**
**dass** der Innenschlauch (42) an eine Pumpe (32) für das Beschichtungsmittel über ein umschaltbares Dreiwegventil (36) angeschlossen ist, das den Innenschlauch (42) entweder mit der Pumpe (32) oder mit einem zur Umgebung offenen Auslass (34) verbindet.

## Claims

1. Installation for spraying a liquid coating agent onto the inner walls of pipes with the cooperation of air,
with a needleless spraying device (1) for the coating agent, which has separate connections (12; 11) for coating agent and air and which can be introduced into the respective pipe and displaced in the longitudinal direction of the latter,
with a stationary supply station (3) for supplying the pressurized coating agent and pressurized air,
and with a hose connection (4) for coating agent and air between the delivery station (3) and the spraying device (1) displaceable in the pipe,
wherein the hose connection (4) comprises an outer hose (41) for the air and an inner hose (42) for the coating agent, which is located inside the outer hose (41) and whose outer diameter is smaller than the inner diameter of the outer hose (41),
**characterized in**
**that** the inner hose (42) is connected to a pump (32) for the coating agent via a switchable three-way valve (36) which connects the inner hose (42) either to the pump (32) or to an outlet (34) open to the environment.

## Revendications

1. Installation pour la pulvérisation d'un produit de revêtement liquide sur les parois intérieures de tuyaux avec intervention d'air,
avec un appareil de pulvérisation sans aiguille (1) pour le produit de revêtement, qui présente des raccords séparés (12 ; 11) pour le produit de revêtement et l'air et qui peut être introduit dans le tube respectif et déplacé dans sa direction longitudinale, avec une station de livraison fixe (3) pour la mise à disposition du produit de revêtement sous pression et de l'air sous pression,
et avec un raccord de tuyau (4) pour le produit de revêtement et l'air entre le poste de livraison (3) et l'appareil de pulvérisation (1) déplaçable dans le tuyau,
la connexion de tuyaux (4) comprenant un tuyau extérieur (41) pour l'air et un tuyau intérieur (42) pour le produit de revêtement, qui se trouve à l'intérieur du tuyau extérieur (41) et dont le diamètre extérieur est inférieur au diamètre intérieur du tuyau extérieur (41),
**caractérisé en ce que**
**en ce que** le tuyau intérieur (42) est raccordé à une pompe (32) pour le produit de revêtement par l'intermédiaire d'une vanne à trois voies commutable (36) qui relie le tuyau intérieur (42) soit à la pompe (32) soit à une sortie (34) ouverte sur l'environnement.
